# EUROPÄISCHE PATENTSCHRIFT

(11) **EP 2 449 667 B1**
(45) Veröffentlichungstag und Bekanntmachung des Hinweises auf die Patenterteilung: **29.05.2013**
(21) Anmeldenummer: 10728596.7
(22) Anmeldetag: 23.06.2010
(51) Int. Cl.: H02P 27/06, H02M 5/458

(54) **UMRICHTER UND VERFAHREN ZUM BETREIBEN EINER ANLAGE MIT UMRICHTER**
CONVERTER AND METHOD FOR OPERATING AN INSTALLATION WITH A CONVERTER
CONVERTISSEUR ET PROCEDE POUR FAIRE FONCTIONNER UNE INSTALLATION AVEC UN CONVERTISSEUR

(30) Priorität: 30.06.2009 DE 102009031257
(43) Veröffentlichungstag der Anmeldung: 09.05.2012
(73) Patentinhaber: SEW-EURODRIVE GmbH & Co. KG, 76646 Bruchsal (DE)
(72) Erfinder: KNELLER, Klaus, 76698 Ubstadt-Weiher (DE)
(86) Internationale Anmeldenummer: PCT/EP2010/003767
(87) Internationale Veröffentlichungsnummer: WO 2011/000492

(56) Entgegenhaltungen:
- EP-A2- 1 206 030
- DE-U1-202004 021 457
- JP-A- 61 200 037
- JP-A- 62 104 481
- JP-A- 2006 238 515
- JP-A- 2006 238 520
- US-A1- 2004 222 754

## Beschreibung

Die Erfindung betrifft einen Umrichter und ein Verfahren zum Betreiben einer Anlage mit einem Umrichter.

Umrichter mit einem Zwischenkreis mit Zwischenkreiskondensator und Verfahren zum Betreiben einer Anlage mit einem Umrichter sind allgemein bekannt.

Aus der JP 2006-238515 A ist ein Verfahren zum Betreiben eines Umrichtersystems bekannt, bei dem Energie aus einem Energiespeicher einer Last zuführbar ist und umgekehrt.

Aus der JP 2006-238520A ist ein Verfahren bekannt, bei dem die in einem Energiespeicher gespeicherte Energie abhängig vom Betriebszustand gesteuert wird.

Der Erfindung liegt daher die Aufgabe zugrunde, einen leistungsstarken Umrichter bei einer leistungsschwachen Netzversorgung auszubilden.

Erfindungsgemäß wird die Aufgabe bei dem Verfahren mit den in Anspruch 1 angegebenen Merkmalen gelöst und bei dem Umrichter mit den in Anspruch 6 angegebenen Merkmalen gelöst.

Wichtige Merkmale der Erfindung bei dem Umrichter sind, dass der Umrichter einen Wechselrichter, einen als Folienkondensator ausgeführten Zwischenkreiskondensator und mindestens einen vom Zwischenkreis versorgten verbraucherseitigen Wechselrichter umfasst, wobei am Zwischenkreis ein zusätzliches Energiespeicherelement angeschlossen ist, so dass verbraucherseitig eine dreifache bis zu zehnfache Überlastteistung, bezogen auf den Wechselrichter, für mindestens 1 Sekunde, insbesondere für mindestens 3 Sekunden bis 60 Sekunden, verfügbar ist. Von Vorteil ist dabei, dass der Wechselrichter kleiner und für weniger Leistung ausgelegt wird und trotzdem große Spitzenleistungen auf der Verbraucherseite zur Verfügung stehen.

Bei einer vorteilhaften Ausgestaltung ist das Energiespeicherelement ein elektrochemischer Doppelschicht-Kondensator. Von Vorteil Ist dabei, dass ein solcher Kondensator eine hohe Speicherfähigkeit bei geringem Bauvolumen aufweist. Zusätzlich erlaubt ein solcher Kondensator hohe Zykluszahlen.

Bei einer weiteren vorteilhaften Ausgestaltung weist der Zwischenkreis eine Zwischenkreisspannung auf, welche variabel einstellbar. Von Vorteil ist dabei, dass die Zwischenkreisspannung an den Leistungsbedarf anpassbar ist.

Bei einer weiteren vorteilhaften Ausgestaltung ist der netzseitige Wechselrichter über je eine Netzdrossel mit einer jeweiligen Netzphase verbunden. Von Vorteil ist dabei, dass EMV Probleme vermieden werden.

Bei einer weiteren vorteilhaften Ausgestaltung sind der Umrichter und die mindestens eine Antriebseinheit von einer programmierbaren Steuerelektronik angesteuert, die einen Regler umfasst, welcher derart gestaltet ist, dass der Regler die Spannung des Zwischenkreises auf einen Sollwert hin regelt. Von Vorteil ist dabei, dass die Zwischenkreisspannung wohldefiniert und zuverlässig einstellbar ist.

Bei einer weiteren vorteilhaften Ausgestaltung umfasst die Steuerelektronik ein Prognosemittel, welches derart gestaltet ist, dass das Prognosemittel einen Sollwert für die Zwischenkreisspannung ermittelt und an den Regler weiter gibt, so dass die Zwischenkreisspannung vorausschauend angepasst wird, insbesondere die Zwischenkreisspannung erhöht wird, wenn bei der Steuerelektronik eine Lastspitze ansteht oder die Zwischenkreisspannung abgesenkt wird, wenn bei der Steuerelektronik eine Energierückgewinnungsspitze ansteht. Von Vorteil ist dabei, dass die Zwischenkreisspannung an einen zukünftigen Leistungsbedarf oder Rückspeisebedarf anpassbar ist.

Wichtige Merkmale der Erfindung bei dem Verfahren zum Betreiben einer Anlage mit einem Umrichter, welcher einen Wechselrichter mit einer variablen Zwischenkreisspannung, einen Energiespeicher im Zwischenkreis, welcher vorzugsweise ein elektrochemischer Doppelschicht-Kondensator ist, mindestens einen weiteren Wechselrichter zur Versorgung einer Antriebseinheit und eine Steuerungselektronik umfasst, sind, dass die Steuerungselektronik über den Wechselrichter die Zwischenkreisspannung erhöht, wenn an der Antriebseinheit eine Lastspitze auf Grund von Steuerungsbefehlen der Steuerungselektronik an den weiteren Wechselrichter zu erwarten ist und die Zwischenkreisspannung absenkt, falls eine Energierückgewinnungsspitze auf Grund von Steuerungsbefehlen der Steuerungselektronik an den weiteren Wechselrichter zu erwarten ist. Von Vorteil ist dabei, dass die Zwischenkreisspannung an den verbraucherseitigen Leistungsbedarf angepasst wird.

Bei einer vorteilhaften Ausgestaltung des Verfahrens wird die Steuerungselektronik von einer Anlagensteuerung angesteuert und die Steuerungsbefehle der Steuerungselektronik an den weiteren Wechselrichter ergeben sich aus Anlagensteuerungsbefehlen der Anlagensteuerung. Von Vorteil ist dabei, dass die Steuerungsbefehle verschiedener weiterer Wechselrichter beziehungsweise der von den weiteren Wechselrichtern angesteuerten Motoren aufeinander abgestimmt werden kann und somit Energie einsparbar ist, wenn die Bremsenergie der Motoren über die weiteren Wechselrichter in den Zwischenkreis einspeisbar ist.

Bei einer weiteren vorteilhaften Ausgestaltung des Verfahrens übermittelt die Anlagensteuerung Prognosen über einen zukünftigen Leistungsbedarf an ein Prognosemittel der Steuerungselektronik, das Prognosemittel ermittelt einen Sollwert für eine Zwischenkreisspannung des Umrichters und die Steuerungselektronik stellt den Sollwert ein, so dass der Leistungsbedarf bei einer Erzeugung von Steuerungsbefehlen berücksichtigt wird. Von Vorteil ist dabei, dass die Zwischenkreisspannung an den zukünftigen Leistungsbedarf der weiteren Wechselrichter angepasst wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Ausführungsbeispielen mit Bezugnahme auf die Zeichnung näher erläutert. Es zeigen rein schematisch:

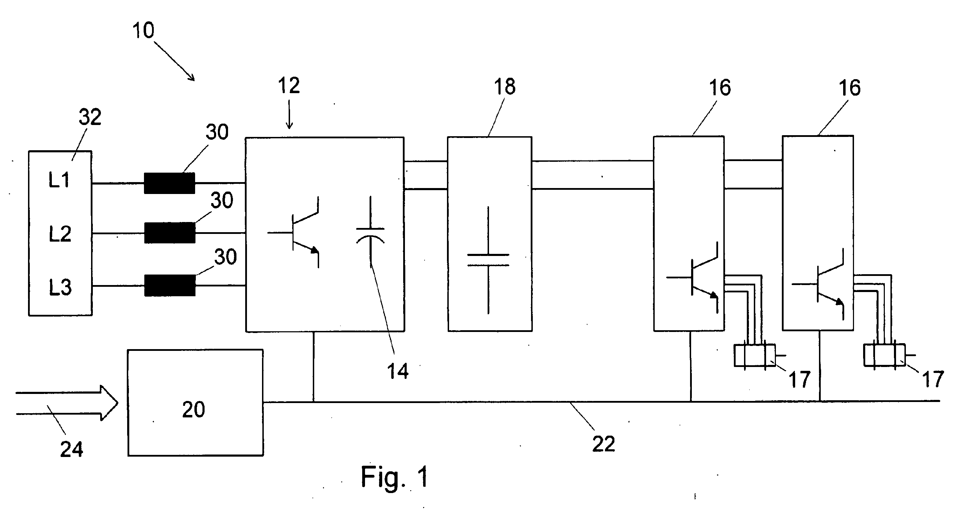

Fig. 1 ein Schaltplan eines erfindungsgemäßen Umrichters

Figur 1 zeigt den Schaltplan eines erfindungsgemäßen Umrichters 10. Der Umrichter 10 umfasst einen Wechselrichter 12. Der Wechselrichter 12 weist drei parallele Halbbrücken auf, die jeweils eine Reihenschaltung von IGBTs oder Thyristoren umfassen. Der Wechselrichter 12 ist als rückspeisefähiger Wechselrichter ausgeführt und ist über je eine Netzdrossel 30 mit je einer Phase L1, L2, L3 eines dreiphasigen Netzes 32 elektrisch verbunden. Die Netzdrosseln 30 sorgen für eine geringere Rückwirkung des Umrichters auf das Netz und somit für eine bessere elektromagnetische Verträglichkeit (EMV) des Umrichters. Die dreiphasige Netzspannung wandelt der Wechselrichter 12 in eine Zwischenkreisspannung um.

Der Zwischenkreis des Umrichters 10 ist als schlanker Zwischenkrels ausgeführt. Dafür weist der Umrichter einen Zwischenkreiskondensator 14 mit relativ geringer Kapazität auf. Die Kapazität ist vorzugsweise kleiner als 4 µFkW/P_{Nenn}. P_{Nenn} ist die Nennleistung des Umrichters 10 in kW. Vorzugsweise ist der Zwischenkreiskondensator als ein unipolarer Folienkondensator ausgeführt.

Der Zwischenkreis ist vorzugsweise als Zwischenkreisverschienung ausgeführt, an der weitere Wechselrichter 16 anschließbar sind. Andere bekannte Ausführungen des Zwischenkreises sind auch möglich. In der in Figur 1 gezeigten Ausführungsform sind zwei weitere Wechselrichter 16 an den Zwischenkreis angeschlossen. Die weiteren Wechselrichter 16 steuern je einen Motor 17 an. Eine generatorisch erzeugte Energie der Motoren 17 wird über die weiteren Wechselrichter 16 wieder in den Zwischenkreis eingespeist.

Weiter ist an den Zwischenkreis ein Energiespeicher 18 angeschlossen. Der Energiespeicher 18 ist vorzugsweise als elektrochemischer Doppelschichtkondensator ausgeführt, welche auch als Superkondensatoren bekannt sind. Diese Superkondensatoren weisen ein vorteilhaftes Verhältnis von Energieaufnahme zu Bauvolumen auf. Weiter erlauben diese Superkondensatoren eine hohe Zykluszahl von über einhunderttausend.

Durch die Verwendung von elektrochemischen Doppelschichtkondensatoren bleibt der Umrichter 10 kompakt. Der Bauraum, welcher durch den Wechselrichter 12 kleinere Leistung eingespart wird, wird vorzugsweise nicht durch das Energiespeicherelement 18 wieder aufgebraucht. Die hohe Zykluszahl beschränkt nicht die Lebensdauer des Umrichters 10.

Der Wechselrichter 12 und die weiteren Wechselrichter 16 sind über einen Systembus 22 mit einer Steuerungselektronik 20 zum Datenaustausch verbunden. Die Steuerungselektronik 20 umfasst einen Regler zur Regelung der Zwischenkreisspannung. Der Regler ist mit dem Wechselrichter 12 verbunden, bzw. steuert den Wechselrichter 12 so an, dass die Spannung des Zwischenkreises auf einen Sollwert hin geregelt wird. Dazu steuert die Steuerungselektronik 20 die Schalter des Wechselrichters 12 so an, dass die Zwischenkreisspannung den Sollwert annimmt. Dies hat den weiteren Vorteil, dass überschüssige Energie im Zwischenkreis in das Netz zurück gespeist werden kann.

Die Steuerungselektronik 20 erhält von einer Anlagensteuerung Anlagensteuerungsbefehle 24 zur Ansteuerung der weiteren Wechselrichter 16. Die Anlagensteuerungsbefehle 24 enthalten auch Informationssignale bezüglich Prognosen zum zukünftigen Leistungsbedarf der Anlage bzw. des Umrichters 10. Die Prognosen sind alternativ aus den Anlagensteuerungsbefehlen durch die Steuerungselektronik 20 mittels eines Prognosemittels berechenbar.

Das Prognosemittel ermittelt auf Grund der Prognose oder der Anlagensteuerungsbefehle ständig wiederkehrend entsprechend der Signaltaktung einen Sollwert für die Zwischenkreisspannung, welchen der Regler übernimmt. Der Regler regelt dann auf Grund dieses Sollwertes die Zwischenkreisspannung. Dafür wird die Zwischenkreisspannung als Ist-Wert erfasst und mit dem Sollwert verglichen. Aus der Differenz des Sollwertes zum Ist-Wert werden Ansteuerungssignale für den rückspeisefähigen Wechselrichter 12 erzeugt. Für die Ansteuerung des Wechselrichters 12 eignen sich insbesondere PulsweitenmodulationsSignale. Durch geeignete Anpassung der Pulsweitenmodulationssignale wird die Zwischenkreisspannung auf den Sollwert hin geregelt. Dadurch lässt sich die Zwischenkreisspannung für einen zukünftigen Leistungsbedarf anpassen.

Zum Beispiel wird die Zwischenkreisspannung gesenkt, wenn eine Energierückgewinnungsspitze auf Grund der Steuerungsbefehlen der Anlagensteuerung oder der Steuerungselektronik zu erwarten ist, dass heißt, dass alle oder viele Motoren abbremsen, d.h. generatorisch betrieben werden sollen. Somit lässt sich die Energie im Zwischenkreis beziehungsweise dem Energiespeicherelement 18 zwischenspeichern.

Ist allerdings mit einer Lastspitze zu rechnen, so kann die Zwischenkreisspannung erhöht werden und die für die Lastspitze erforderliche Energie wird aus dem Energiespeicherelement 18 bezogen. Insbesondere bei Lastspitzen reicht die im Energiespeicherelement 18 gespeicherte Energie aus, um den weiteren Wechselrichter 16 oder die weiteren Wechselrichter 16 für mindestens 1 Sekunde mit Energie zu versorgen. Vorzugsweise werden bei Lastspitzen die weiteren Wechselrichter 16 für 3 Sekunden bis 60 Sekunden hauptsächlich aus dem Energiespeicherelement 18 mit Energie versorgt.

Somit lässt sich der Wechselrichter 12 auf eine geringere Leistung auslegen, da die Überlastfähigkeit des Umrichters 10 gesteigert wurde. Dies spart Kosten und auch Bauraum. Somit sind kompakte Umrichter für hohe Spitzenleistungen möglich. Bekannt sind Überlastfähigkeiten von 110% bis 200% für eine bis 60 Sekunden. Durch das Energiespeicherelement 18 erhöht sich die Überlastfähigkeit des Umrichters 10 auf das dreifache bis 10-fache für mindestens 1 Sekunde, insbesondere für 3 bis 60 Sekunden, vorzugsweise 5 bis 60 Sekunden. So kann bei einer Spitzenlast von 100 kW der Wechselrichter auf 10 kW ausgelegt werden und nicht wie im Stand der Technik auf ca. 76 kW.

### Bezugszeichenliste

| | |
|---|---|
| 10 | Umrichter |
| 12 | Wechselrichter |
| 14 | Zwischenkreiskondensator |
| 16 | weiterer Wechselrichter |
| 17 | Motor |
| 18 | Energiespeicherelement |
| 20 | Steuerungselektronik |
| 22 | Systembus |
| 24 | Anlagensteuerungsbefehle |
| 30 | Netzdrossel |
| 32 | Netz |

## Patentansprüche

1. **Verfahren zum Betreiben einer Anlage mit einer Anlagensteuerung, welche Steuerungsbefehle erzeugt und eine Steuerungseinheit von einer Anlagensteuerung angesteuert wird,**
wobei die Anlage einen Umrichter (10) aufweist, welcher
- einen rückspeisefähigen Wechselrichter (12) mit einem als Folien Kondensator ausgeführten Zwischenkreis-Kondensator (14) und einer einstellbaren Zwischenkreisspannung,
- ein Energiespeicherelement (18) im Zwischenkreis, welches vorzugsweise ein elektrochemischer Doppelschicht-Kondensator ist,
- mindestens einen weiteren Wechselrichter (16), welcher rückspeisefähig ist, zur Versorgung einer Antriebseinheit und
- eine Steuerungselektronik (20) aufweist,
wobei der Zwischenkreis ein schlanker Zwischenkreis ist,
wobei die Steuerungsbefehle der Steuerungselektronik (20) an den weiteren Wechselrichter (16) abhängig von Anlagensteuerungsbefehlen (24) der Anlagensteuerung bestimmt werden,
wobei der zu den jeweiligen Steuerungsbefehlen zugehörige zukünftige Leistungsbedarf prognostiziert wird und daraus ständig wiederkehrend ein Sollwert für eine Zwischenkreisspannung des Umrichters (10) ermittelt wird,
wobei die Steuerungselektronik (20) den Sollwert einsteilt,
so dass der Leistungsbedarf bei einer Erzeugung von Steuerungsbefehlen berücksichtigt wird,
wobei
- die Steuerungselektronik (20) über den Wechselrichter (12) die Zwischenkreisspannung erhöht, wenn an der Antriebseinheit eine Lastspitze aufgrund von Steuerungsbefehlen der Steuerungselektronik (20) an den weiteren Wechselrichter (16) zu erwarten ist und
- die Zwischenkreisspannung absenkt, falls eine Energierückgewinnungsspitze auf Grund von Steuerungsbefehlen der Steuerungseinheit an den weiteren Wechselrichter (16) zu erwarten ist.

2. Verfahren nach Anspruch 1,
**dadurch gekennzeichnet, dass**
die Zwischenkreisspannung als Ist-Wert erfasst wird,
die Zwischenkreisspannung mit einem Sollwert verglichen wird,
aus der Differenz des Sollwertes zum Ist-Wert derartige Ansteuerungssignale, insbesondere Pulsweitenmodulationssignale, für den rückspeisefähigen Wechselrichter (12) erzeugt werden, so dass die Zwischenkreisspannung auf den Sollwert hin geregelt wird.

3. Verfahren nach Anspruch 1 oder 2,
**dadurch gekennzeichnet, dass**
der weitere Wechselrichter (16) für mindesten 1 Sekunde, insbesondere zwischen 3 Sekunden und 60 Sekunden, bei einer Lastspitze aus dem Energiespeicherelement (18) mit Energie versorgt wird.

4. Verfahren nach einem der Ansprüche 1 bis 3,
**dadurch gekennzeichnet, dass**
die Steuerungseinheit von einer Anlagensteuerung angesteuert wird und die Steuerungsbefehlen der Steuerungselektronik (20) an den weiteren Wechselrichter (16) abhängig von Anlagensteuerungsbefehlen (24) der Anlagensteuerung bestimmt werden.

5. Verfahren nach einem der Ansprüche 1 bis 4,
**dadurch gekennzeichnet, dass**
die Anlagensteuerung Informationssignale bezüglich Prognosen über einen zukünftigen Leistungsbedarf an ein Prognosemittel der Steuerungselektronik (20) übermittelt,
das Prognosemittel ständig wiederkehrend einen Sollwert für eine Zwischenkreisspannung des Umrichters (10) ermittelt,
die Steuerungselektronik (20) den Sollwert einstellt,
so dass der Leistungsbedarf bei einer Erzeugung von Steuerungsbefehlen berücksichtigt wird.

6. Umrichter (10), welcher einen Wechselrichter (12), einen als Folienkondensator ausgeführten Zwischenkreiskondensator (14) und mindestens einen vom Zwischenkreis versorgten weiteren Wechselrichter (16) umfasst,
**dadurch gekennzeichnet, dass**
am Zwischenkreis ein zusätzliches Energiespeicherelement (18) angeschlossen ist, so dass verbraucherseitig eine dreifache bis zu zehnfache Überlastleistung, bezogen auf den Wechselrichter (12), für mindestens 1 Sekunde, insbesondere 3 Sekunden bis 60 Sekunden,
verfügbar ist,
wobei der Zwischenkreis ein schlanker Zwischenkreis ist,
wobei der Umrichter (10) und die mindestens eine Antriebseinheit von einer programmierbaren Steuerelektronik (20) angesteuert sind, die einen Regler umfasst,
wobei die Steuerungsbefehle der Steuerungselektronik (20) an den weiteren Wechselrichter (16) abhängig von Anlagensteuerungsbefehlen (24) der Anlagensteuerung bestimmt werden,
wobei der zu den jeweiligen Steuerungsbefehlen zugehörige zukünftige Leistungsbedarf prognostiziert wird und daraus ständig wiederkehrend ein Sollwert für eine Zwischenkreisspannung des Umrichters (10) ermittelt wird,
wobei die Steuerungselektronik (20) den Sollwert einstellt, so dass der Leistungsbedarf bei einer Erzeugung von Steuerungsbefehlen berücksichtigt wird, und der Regler die Spannung des Zwischenkreises auf den Sollwert hin regelt, und
wobei der Wechselrichter (12) netzseltig über Je eine Netzdrossel mit einer jeweiligen Netzphase verbunden ist.

7. Umrichter (10) nach Anspruch 6, welcher einen Wechselrichter (12), einen als Folienkondensator ausgeführten Zwischenkreiskondensator (14) und mindestens einen vom Zwischenkreis versorgten weiteren Wechselrichter (16) umfasst,
**dadurch gekennzeichnet, dass**
am Zwischenkreis ein zusätzliches Energiespeicherelement (18) angeschlossen ist, so dass verbraucherseitig eine dreifache bis zu zehnfache Überlastleistung, bezogen auf den Wechselrichter (12), für mindestens 1 Sekunde, insbesondere 3 Sekunden bis 60 Sekunden,
verfügbar ist,
wobei der Umrichter (10) und die mindestens eine Antriebseinheit von einer programmierbaren Steuerelektronik angesteuert sind, die einen Regler umfasst, welcher die Spannung des Zwischenkreises auf einen Sollwert hin regelt,
wobei die Steuerelektronik Prognosemittel umfasst, welche aus den Steuerungsbefehlen der dem Umrichter (10) übergeordneten Anlagensteuerung einen Sollwert für die Zwischenkreisspannung ermitteln und an den Regler weiter geben, so dass die Zwischenkreisspannung vorausschauend angepasst wird, insbesondere die Zwischenkreisspannung erhöht wird, wenn bei der Steuerelektronik eine Lastspitze ansteht oder die Zwischenkreisspannung abgesenkt wird, wenn bei der Steuerelektronik eine Energierückgewinnungsspitze ansteht.

8. Umrichter (10) nach Anspruch 6,
**dadurch gekennzeichnet, dass**
das Energiespeicherelement (18) ein elektrochemischer Doppelschicht-Kondensator ist.

9. Umrichter (10) nach Anspruch 6 oder 7,
**dadurch gekennzeichnet, dass**
der Zwischenkreis eine Zwischenkreisspannung aufweist, welche variabel einstellbar ist.

10. Umrichter (10) nach einem der Ansprüche 6 bis 8,
**dadurch gekennzeichnet, dass**
der Wechselrichter (12) netzseitig über je eine Netzdrossel mit einer jeweiligen Netzphase verbunden ist.

## Claims

1. Method for operating an installation with an installation control which generates control commands and a control unit is controlled by an installation control,
wherein the installation has a converter (10) which has
- a feedback inverter (12) with an intermediate-circuit capacitor (14) formed as a film capacitor and an adjustable intermediate-circuit voltage,
- an energy storage element (18) in the intermediate circuit, which element is preferably an electrochemical double-layer capacitor,
- at least one further feedback inverter (16) for supplying a drive unit and
- control electronics (20),
wherein the intermediate circuit is a slim intermediate circuit,
wherein the control commands of the control electronics (20) to the further inverter (16) are determined in dependence on installation control commands (24) of the installation control,
wherein the future power demand associated with the respective control commands is forecast and from this a desired value for an intermediate-circuit voltage of the converter (10) is determined in a continually recurrent manner,
wherein the control electronics (20) set the desired value,
so that the power demand is taken into account in a generation of control commands,
wherein
- the control electronics (20) increase the intermediate-circuit voltage via the inverter (12) when a peak load is to be expected at the drive unit based on control commands of the control electronics (20) to the further inverter (16), and
- decrease the intermediate-circuit voltage if an energy recovery peak is to be expected based on control commands of the control unit to the further inverter (16).

2. Method according to Claim 1,
**characterised in that**
the intermediate-circuit voltage is acquired as an actual value,
the intermediate-circuit voltage is compared with a desired value,
from the difference between the desired value and the actual value, such control signals, in particular pulse-width modulation signals, are generated for the feedback inverter (12) that the intermediate-circuit voltage is adjusted to the desired value.

3. Method according to Claim 1 or 2,
**characterised in that**
the further inverter (16) is supplied with energy from the energy storage element (18) for at least 1 second, in particular between 3 seconds and 60 seconds, in the case of a peak load.

4. Method according to one of Claims 1 to 3,
**characterised in that**
the control unit is controlled by an installation control and the control commands of the control electronics (20) to the further inverter (16) are determined in dependence on installation control commands (24) of the installation control.

5. Method according to one of Claims 1 to 4,
**characterised in that**
the installation control transmits information signals regarding forecasts about a future power demand to a forecasting means of the control electronics (20),
the forecasting means determines in a continually recurrent manner a desired value for an intermediate-circuit voltage of the converter (10),
the control electronics (20) set the desired value,
so that the power demand is taken into account in a generation of control commands.

6. Converter (10) which comprises an inverter (12), an intermediate-circuit capacitor (14) formed as a film capacitor, and at least one further inverter (16) supplied by the intermediate circuit,
**characterised in that**
an additional energy storage element (18) is connected to the intermediate circuit, so that on the load side a threefold up to tenfold overload power, with respect to the inverter (12), is available for at least 1 second, in particular 3 seconds to 60 seconds,
wherein the intermediate circuit is a slim intermediate circuit,
wherein the converter (10) and the at least one drive unit are controlled by programmable control electronics (20) comprising a controller,
wherein the control commands of the control electronics (20) to the further inverter (16) are determined in dependence on installation control commands (24) of the installation control,
wherein the future power demand associated with the respective control commands is forecast and from this a desired value for an intermediate-circuit voltage of the converter (10) is determined in a continually recurrent manner,
wherein the control electronics (20) set the desired value,
so that the power demand is taken into account in a generation of control commands, and the controller adjusts the voltage of the intermediate circuit to the desired value, and
wherein the inverter (12) is connected on the line side, via in each case one line reactor, to a respective line phase.

7. Converter (10) according to Claim 6, which comprises an inverter (12), an intermediate-circuit capacitor (14) formed as a film capacitor, and at least one further inverter (16) supplied by the intermediate circuit,
**characterised in that**
an additional energy storage element (18) is connected to the intermediate circuit, so that on the load side a threefold up to tenfold overload power, with respect to the inverter (12), is available for at least 1 second, in particular 3 seconds to 60 seconds,
wherein the converter (10) and the at least one drive unit are controlled by programmable control electronics comprising a controller, which adjusts the voltage of the intermediate circuit to a desired value,
wherein the control electronics comprise forecasting means which determine a desired value for the intermediate-circuit voltage from the control commands of the installation control which is at a higher level than the converter (10), and pass on this desired value to the controller, so that the intermediate-circuit voltage is adapted in an anticipatory manner, in particular the intermediate-circuit voltage is increased when a peak load is expected in the control electronics or the intermediate-circuit voltage is decreased when an energy recovery peak is expected in the control electronics.

8. Converter (10) according to Claim 6,
**characterised in that**
the energy storage element (18) is an electrochemical double-layer capacitor.

9. Converter (10) according to Claim 6 or 7,
**characterised in that**
the intermediate circuit has an intermediate-circuit voltage which is variably adjustable.

10. Converter (10) according to one of Claims 6 to 8,
**characterised in that**
the inverter (12) is connected on the line side, via in each case one line reactor, to a respective line phase.

## Revendications

1. Procédé permettant de faire fonctionner une installation comprenant une commande d'installation qui génère des instructions de commande et une unité de commande qui est commandée par une commande d'installation,
l'installation présentant un variateur de vitesse (10) qui présente
- un onduleur (12) à réinjection d'énergie avec un condensateur de circuit intermédiaire (14) réalisé sous la forme d'un condensateur à film et avec une tension de circuit intermédiaire réglable,
- un élément de stockage d'énergie (18) dans le circuit intermédiaire, qui est de préférence un condensateur électrochimique à double couche,
- au moins un autre onduleur (16), qui permet la réinjection d'énergie, pour alimenter une unité d'entraînement et
- une électronique de commande (20),
le circuit intermédiaire étant un circuit intermédiaire mince,
les instructions de commande de l'électronique de commande (20) à l'autre onduleur (16) étant déterminées en fonction des instructions de commande d'installation (24) de la commande d'installation,
le futur besoin de puissance correspondant aux instructions de commande respectives étant prédit et une valeur de consigne pour une tension de circuit intermédiaire du variateur de vitesse (10) étant déterminée de manière récurrente à partir de celui-ci,
l'électronique de commande (20) réglant la valeur de consigne de manière à prendre en compte le besoin de puissance lors d'une génération d'instructions de commande,
- l'électronique de commande (20) élevant la tension de circuit intermédiaire par l'intermédiaire de l'onduleur (12) quand une pointe de charge est attendue sur l'unité d'entraînement en raison d'instructions de commande de l'électronique de commande (20) à l'autre onduleur (16) et
- l'électronique de commande (20) abaissant la tension de circuit intermédiaire quand une pointe de récupération d'énergie est attendue en raison d'instructions de commande de l'unité de commande à l'autre onduleur (16).

2. Procédé selon la revendication 1,
**caractérisé en ce que**
la tension de circuit intermédiaire est détectée en tant que valeur réelle,
la tension de circuit intermédiaire est comparée avec une valeur de consigne,
à partir de la différence entre la valeur de consigne et la valeur réelle, des signaux de commande, en particulier des signaux modulés en largeur d'impulsion, sont générés pour l'onduleur à réinjection d'énergie (12) de manière à réguler la tension de circuit intermédiaire sur la valeur de consigne.

3. Procédé selon la revendication 1 ou 2,
**caractérisé en ce que**
l'autre onduleur (16) est alimenté en énergie à partir de l'élément de stockage d'énergie (18) pendant au moins 1 seconde, en particulier entre 3 secondes et 60 secondes, lors d'une pointe de charge.

4. Procédé selon une des revendications 1 à 3,
**caractérisé en ce que**
l'unité de commande est commandée par une commande d'installation et les instructions de commande de l'électronique de commande (20) à l'autre onduleur (16) sont déterminées en fonction d'instructions de commande d'installation (24) de la commande d'installation.

5. Procédé selon une des revendications 1 à 4,
**caractérisé en ce que**
la commande d'installation transmet des signaux d'information concernant des prévisions sur un futur besoin de puissance à un moyen de prévision de l'électronique de commande (20),
le moyen de prévision détermine de manière récurrente une valeur de consigne pour une tension de circuit intermédiaire du variateur de vitesse (10),
l'électronique de commande (20) règle la valeur de consigne de manière à prendre en compte le besoin de puissance lors d'une génération d'instructions de commande.

6. Variateur de vitesse (10), lequel comprend un onduleur (12), un condensateur de circuit intermédiaire (14) réalisé sous la forme d'un condensateur à film et au moins un autre onduleur (16) alimenté par le circuit intermédiaire,
**caractérisé en ce que**
un élément de stockage d'énergie (18) supplémentaire est raccordé au circuit intermédiaire, de sorte qu'une puissance de surcharge triple à décuple, par rapport à l'onduleur (12), est disponible pendant au moins 1 seconde, en particulier entre 3 secondes et 60 secondes, côté consommateur,
le circuit intermédiaire étant un circuit intermédiaire mince,
le variateur de vitesse (10) et ladite au moins une unité d'entraînement étant commandés par une électronique de commande (20) programmable qui comprend un régulateur,
les instructions de commande de l'électronique de commande (20) à l'autre onduleur (16) étant déterminées en fonction des instructions de commande d'installation (24) de la commande d'installation,
le futur besoin de puissance correspondant aux instructions de commande respectives étant prédit et une valeur de consigne pour une tension de circuit intermédiaire du variateur de vitesse (10) étant déterminée de manière récurrente à partir de celui-ci,
l'électronique de commande (20) réglant la valeur de consigne de manière à prendre en compte le besoin de puissance lors d'une génération d'instructions de commande, et le régulateur régulant la tension du circuit intermédiaire sur la valeur de consigne, et l'onduleur (12) étant relié côté réseau, via chaque fois une self de réseau, à une phase de réseau respective.

7. Variateur de vitesse (10) selon la revendication 6, lequel comprend un onduleur (12), un condensateur de circuit intermédiaire (14) réalisé sous la forme d'un condensateur à film et au moins un autre onduleur (16) alimenté par le circuit intermédiaire,
**caractérisé en ce que**
un élément de stockage d'énergie (18) supplémentaire est raccordé au circuit intermédiaire, de sorte qu'une puissance de surcharge triple à décuple, par rapport à l'onduleur (12), est disponible pendant au moins 1 seconde, en particulier entre 3 secondes et 60 secondes, côté consommateur,
le variateur de vitesse (10) et ladite au moins une unité d'entraînement étant commandés par une électronique de commande (20) programmable qui comprend un régulateur qui régule la tension du circuit intermédiaire sur une valeur de consigne,
l'électronique de commande comprenant des moyens de prévision qui, à partir des instructions de commande de la commande d'installation superordonnée au variateur de vitesse (10), déterminent une valeur de consigne pour la tension de circuit intermédiaire et la transmettent au régulateur, de sorte que la tension de circuit intermédiaire est adaptée de manière anticipée, en particulier la tension de circuit intermédiaire élevée quand une pointe de charge est attendue à l'électronique de commande ou la tension de circuit intermédiaire abaissée quand une pointe de récupération d'énergie est attendue à l'électronique de commande.

8. Variateur de vitesse (10) selon la revendication 6,
**caractérisé en ce que**
l'élément de stockage d'énergie (18) est un condensateur électrochimique à double couche.

9. Variateur de vitesse (10) selon la revendication 6 ou 7,
**caractérisé en ce que**
le circuit intermédiaire présente une tension de circuit intermédiaire qui est réglable de manière variable.

10. Variateur de vitesse (10) selon une des revendications 6 à 8,
**caractérisé en ce que**
l'onduleur (12) est relié côté réseau, via chaque fois une self de réseau, à une phase de réseau respective.
